# EUROPÄISCHE PATENTSCHRIFT

(11) **EP 0 879 982 B1**
(45) Veröffentlichungstag und Bekanntmachung des Hinweises auf die Patenterteilung: **02.04.2003**
(21) Anmeldenummer: 97122757.4
(22) Anmeldetag: 23.12.1997
(51) Int. Cl.: F16L 27/08, F16L 33/22

(54) **Schlauchkupplung**
Hose coupling
Accouplement pour tuyau flexible

(30) Priorität: 23.05.1997 CH 120797; 26.08.1997 CH 198597
(43) Veröffentlichungstag der Anmeldung: 25.11.1998
(73) Patentinhaber: INNOTRADE Entwicklungs- und Vertriebsgesmbh, 6780 Silbertal (AT)
(72) Erfinder: Erhard, Wilhelm, 6780 Silbertal (AT)
(74) Vertreter: Rosenich, Paul, Dipl.-Ing.

(56) Entgegenhaltungen:
- CH-A- 363 207
- DE-A- 3 627 274
- DE-C- 3 520 874
- DE-U- 9 414 482
- FR-A- 2 311 978
- GB-A- 1 319 667
- GB-A- 2 112 483
- US-A- 3 011 803
- US-A- 4 354 698
- US-A- 4 564 222

## Beschreibung

Die Erfindung bezieht sich auf eine Schlauchkupplung nach dem Oberbegriff des Anspruches 1,

Beim Erstellen von Schlauchleitungen wird zumindest ein Schlauchabschnitt mit einem Anschluss verbunden. Meist werden aber mehrere Schlauchabschnitte zusammengesetzt. Sowohl die Verbindung mit dem Anschluss als auch die Verbindung zweier Schlauchabschnitte umfasst eine erste Verbindungsvorrichtung, die an einem Schlauchende befestigt ist und mit einer zweiten Verbindungsvorrichtung des Anschlusses bzw. eines anderen Schlauchabschnittes lösbar verbunden werden kann. Die erste Verbindungsvorrichtung muss einfach aufgebaut sein und bei zusammengestellten Schlauchleitungen gewährleisten, dass diese mit Zug belastbar und auch dann einfach handhabbar sind.

Die vorliegende Erfindung bezieht sich u.a. auf Verbindungsvorrichtungen für Druck- und Saugschläuche, welche sich durch besondere Leichtgängigkeit, Robustheit und durch besonders kompakte Bauweise von bekannten Konstruktionen unterscheiden. Die hier beschriebene Verbindungsvorrichtung kann aufgrund ihrer besonderen Konstruktionsmerkmale in fast alle Bajonett-Verschluss-Kupplungen, wie beispielsweise Kupplungen für Feuerwehrschläuche der Grössen A;B,C oder D, in Pressluft-Momentkupplungen sowie in diverse Schraub- und Steck-Kupplungen für Hochdruckschläuche integriert werden.

Bekannte Konstruktionen von Drehkupplungen sind meist als Zusatzgeräte konzipiert, welche zwischen zwei Kupplungen eingefügt werden und sind daher unhandlich und schwer. Viele der heute gebräuchlichen Drehkupplungen werden bei zunehmendem Druck schwergängig. Andere Mängel, die hauptsachlich bei Billigprodukten auftreten, sind neben Schwergängigkeit, eingeschränkte Lebensdauer infolge ungeeigneter Werkstoffe sowie Empfindlichkeit gegen Schmutz und mechanische Beanspruchung. Probleme mit widerspenstigen Schläuchen verschiedenster Art sind allgemein bekannt. Schläuche mit grossem Durchmesser, (z.B. A-Saugschlauch der Feuerwehr) Schläuche mit grosser Wandstärke für hohe Drücke oder besondere Einsatzbedingungen, Schläuche aus wenig flexiblen Materialien und mit Stahlgewebe-Einlagen, oder Schläuche, die sich infolge eines hohen Innendruckes versteifen, haben ein gemeinsames Merkmal: Sie lassen sich nicht oder nur sehr wenig verdrehen. Diese bekannten ungünstigen Eigenschaften von Schläuchen führen einerseits zu Problemen an den Anschluss- und Verbindungsstellen und beeinträchtigen andererseits die Handhabung von angeschlossenen Geräten bis hin zur Unfallgefahr. Widerspenstige, oft mehrfach verschlungene Schläuche lassen sich nur schwer entwirren, wenn sie sich nicht drehen lassen, weil sie irgendwo fest angeschlossen sind. Bekannt sind auch Probleme mit verdreht ausgelegten Feurwehrschläuchen, Probleme, die oft nur durch zeitraubendes Ab- und Ankuppeln gelöst werden können.

Widerspenstige Schläuche können durch Eigendrehung Bajonett Kupplungen ungewollt öffnen, was zu Zeitverlusten im Löscheinsatz, zu Sachschäden und zu Unfällen führen kann. Widerspenstige Schläuche an Arbeitsgeräten wie Strahlrohren, Löschpistolen oder Presslufthämmern führen zu Beeinträchtigungen bei der Handhabung solcher Geräte und erhöhen das Unfallrisiko. Schlauch-Schnellkupplungen sollen meist ein rasches An- oder Abkuppeln, möglichst ohne Verwendung von Werkzeug ermöglichen (Beispiel: Feuerwehr) und können daher nicht mit beliebig schwergängigen Rasten versehen werden. Dieses leichtgängige Ein- und Ausrasten macht Bajonett-Schnellkupplungen jedoch besonders anfällig gegen die Eigendrehung des Schlauches. In den angeführten Problemfällen kann durch den Einsatz einer extrem leichtgängigen Drehkupplung, welche möglichst in die Schnellkupplung integriert sein sollte, Abhilfe geschaffen werden.

Zum Befestigen eines Schlauchendes an bekannten Verbindungsvorrichtungen wird das Schlauchende über einen Anschlussstutzen gestossen und mit Bindedraht, Schlauchbindern oder Manschetten daran befestigt. Bei der Montage werden etwa Bindemaschinen benötigt. Diese Befestigungsweise ist aufwendig und kann die gewünschte Zugfestigkeit nicht immer gewährleisten. Bei zu festem Anziehen kann das Bindematerial den Schlauch verletzen und bei zu schwachem Anziehen kann der Schlauch herausrutschen. Zudem führen vorstehende Teile, insbesondere scharfe Kanten oder Spitzen, von Bindedrähten, Schlauchbindern oder Manschetten zu einer erhöhten Verletzungsgefahr. Das Bindematerial ist meist nur einmal verwendbar.

Der Erfindung liegt nun die Aufgabe zugrunde, eine Schlauchkupplung zu finden, die einfach aufgebaut ist und auch bei zugbeanspruchten Schlauchleitungen eine sichere Verbindung und problemlose Handhabung ermöglicht.

Bei der Lösung der Aufgabe wurde erkannt, dass die Schlauchkupplung eine zugfeste, im wesentlichen von der Zug- bzw. Druckbelastung unabhängige Drehkupplung und/oder eine zugfeste Schlauch-Klemmvorrichtung umfassen muss.

Eine bevorzugte Ausführungsform der Verbindungsvorrichtung umfasst eine Drehkupplung mit mindestens einem Kugellager und einer radialen Drehdichtung, sowie eine Schlauch-Klemmvorrichtung mit einer Innenhülse, einer als Überwurfmutter darauf sitzenden Aussenhülse und einer Klemmhülse, wobei eine Konusfläche der Aussenhülse an einer Konusfläche der Klemmhülse anliegt und diese durch eine axiale Bewegung der Aussenhülse radial nach innen gegen ein eingeschobenes Schlauchende pressbar macht. Um die Klemmwirkung stark zu erhohen, sind an der Innenseite der Klemmhülse nach innen vorstehende radial verlaufende Vorsprünge und an der Aussenseite der Innenhülse an die Vorsprünge angepasste radial verlaufende Vertiefungen vorgesehen, so dass ein festgeklemmter Schlauch balgartig verformt wird. Die dabei entstehende Klemmung ist äusserst zugfest.

Die radiale Drehdichtung der Drehkupplung umfasst zwei im wesentlichen zylindrische, einander zugeordnete, um die Schlauchachse verlaufende Gleitflächen, wobei eine erste an einem hülsenförmigen Kupplungsteil und eine zweite an einem Dichtungsring ausgebildet ist. Der Dichtungsring ist zweikomponentig, insbesondere zweiteilig, aufgebaut. Eine erste Komponente bildet eine Gleitfläche, die im Zusammenwirken mit der ersten Gleitfläche reibungsarm ist. Diese erste Komponente soll als Gleitkomponente bezeichnet werden. Die andere Komponente ist elastisch verformbar und hat eine Dichtungsfunktion. Das in der Leitung geförderte Fluid gelangt auf der einen axial ausgerichteten Seite der elastischen Komponente mit dieser in Kontakt und drückt diese mit der Druckdifferenz zwischen dem Schlauchinneren und der Umgebung dichtend in eine Dichtungsaufnahme. Die Dichtungsaufnahme ist als ringförmige, nach innen oder aussen offene Nut ausgebildet. Die elastisch verformbare Komponente wird als Dichtungskomponente bezeichnet und verhindert ein axiales Austreten von Förderfluid durch den Dichtungsbereich. Dazu wird die Dichtungskomponente vom Fluiddruck etwas verformt, insbesondere wird sie in axialer Richtung etwas zusammengepresst. Dieses Zusammenpressen führt zu einer Ausdehnung in radialer Richtung und somit auch zu einem Zusammenpressen der Gleitflächen. Dadurch wird der Ringspalt zwischen der ersten Gleitfläche und der Berandung der Dichtungsaufnahme im wesentlichen leckfrei verschlossen.

Wie bereits beschrieben , ist gemäss einer besonderen, auch unabhängig einsetzbaren erfinderischen Lösung zur Aufnahme sowohl der statischen, als auch der dynamischen Dichtung ein ringförmiger Bauteil, im folgenden "Dichtungsträger" genannt, vorgesehen. Dieser Dichtungsträger soll möglichst rasch und unkompliziert ausgewechselt werden können und ist daher entsprechend einer besonderen, selbständigen Erfindungsidee nicht eingeschraubt, sondern wird durch einen Schnappmechanismus fixiert, welcher den Dichtungsträger auch unter harten Einsatzbedingungen zuverlässig festhält und andererseits bei Überschreiten einer bestimmten axiale Kraft (z.B. Ausheben mit Werkzeug) zuverlässig ausrastet, um den Dichtungsträger freizugeben. Um diese scheinbar widersprüchlichen Anforderungen erfüllen zu können, wurde ein speziell geformter Sprengring entwickelt, welcher einem Dreieck mit ausgewölbten Seiten gleicht. Im Gegensatz zu herkömmlichen, runden Sprengringen sind die Ausrastkräfte bei diesem Ring sehr genau berechenbar bzw. über die Federkraft wählbar und es besteht nicht die Gefahr, dass der Ring beim Einsetzen des Dichtungsträgers exzentrisch verrutscht und/oder diesen beschädigt bzw. das Einrasten verhindert. Der erfindungsgemässe Spezial-Sprengring ist im Gegensatz zu herkömmlichen Sprengring nicht nach innen, sondern nach aussen vorgespannt und zentriert sich selbst durch seine Dreipunkt-Auflage. Ausserdem sind die Ausrastkräfte um ein Vielfaches höher als bei runden Sprengringen gleicher Drahtstärke und mit dem selben Durchmesser. Als bestimmende Grösse für die Federkraft gilt jeweils nur eine Seitenlänge des Dreieckes und nicht die gesamte Umfangslänge.

Für die präzise Führung des drehenden bzw. feststehenden Kupplungsteiles zueinander wurde entsprechend einer weiteren unabhängigen Erfindungsidee ein spezielles Kugellager entwickelt. Es gleicht einem einreihigen Schrägkugellager, wobei jedoch erfindungsgemäss in beiden Richtungen eine axiale Führung gegeben ist. Um einen möglichst hohe Tragfähigkeit bei geringen Baumassen zu erreichen, wurde das Lager als vollkugeliges, kraftloses Lager konzipiert. Herkömmliche vollkugelige Lager sind stets mit einem teilbaren Innen- bzw. Aussenring versehen, um die Kugel einfüllen zu können.

Die Erfindung beschreibt demgegenüber ein vollkugeliges Lager mit ungeteiltem Innen- und Aussenring. Der Aussenring wird schräg auf den mit Kugeln voll bestückten Innenring aufgesetzt und dann unter Ausnutzung der elastischen Verformbarkeit des Werkstoffes aufgepresst bis er einrastet. Anschliessend wird das relativ grosse Radialspiel durch Einpressen des Lagers in das Gehäuse auf die richtige Grösse reduziert. Die Abmessungen und Werkstoffe werden dementsprechend gewählt. Die Anwendung dieser Erfindung ist bei einer Schlauchkupplung gut möglich, da die Rundlaufeigenschaften der Kugeln bzw. Lager nicht so hohen Anforderungen unterliegt, wie z.B. bei einem Radlager.

Die beschriebene, erfindungsgemässe Schlaucheinbindung mittels Klemmhülse und Überwurfmutter wurde erfindungsgemäss so gestaltet, dass der Schlauch durch den Rand der Überwurfmutter vor Beschädigungen geschützt wird. Beim Aufrollen des Schlauches nach dem (z.B. Feuerwehr-) Einsatz wird zumindest ein Ende des Schlauches meist achtlos über den Boden geschleift, wodurch bei der gebräuchlichen Schlaucheinbindung das Gewebe des Schlauches am Ende der Schlauchhülle aufgescheuert wird. Bei der erfindungsgemässen Schlaucheinbindung werden solche Beschädigungen weitgehend verhindert, da nur Metallteile, nicht jedoch Schlauchmaterial über den Boden schleifen. Die Metallteile sind darüber hinaus aufgrund ihrer besonderen Formgebung besser geeignet, Verletzungen von Bedienpersonal zu vermeiden, da sie keine vorspringenden oder drahtförmigen Elemente aufweisen.

Durch die erfindungsgemässe Drehkupplung, die nicht nur zwischen Schläuchen, sondern insbesondere auch bei Schlauchverteilern zur Anwendung gelangt, wird die Sicherheit weiters dadurch verbessert, dass allfällige Drehmomente am Schlauch nicht, wie bislang zu einer Ort- oder Lageveränderung der Verteiler führt. Als weiterer Vorteil der neuen Lösung gegenüber bekanntem zeigt sich, dass Schläuche schneller verlegt werden können, ohne auf deren Lage zu achten. Bei herkömmlichen Systemen könnte nämlich ein Linksdrall an einem Schlauch unbeabsichtigt sogar die Kupplung öffnen. Deshalb musste man sich immer bemühen, die Schläuche gerade auszulegen.

Eine andere, erfindungsgemässe Ausführungsvariante beschreibt eine Drehkupplung, bei welcher mehrere Teile unlosbar zu einer Dreheinheit verbunden sind, mit Bauteilen, deren Funktionsweise im Vorangegangenen eingehend beschrieben wurden. Diese Variante bietet den Vorteil, dass kein separater Einrastmechanismus für den Dichtungsträger sowie keine präzise Bearbeitung des Kupplungsteiles (Knaggenteil) erforderlich sind. Ein weiterer Vorteil dieser Variante besteht darin, dass das rotierende Teil besonders präzise und konzentrisch zum Dichtring geführt wird und diese Präzision auch nicht durch häufiges Ein- und Ausbauen beeinträchtigt wird. Sie ist ausserdem aufgrund der Einfachheit (ein einziges Bauteil) besonders unproblematisch in der Handhabung.

Eine etwas abgewandelte Form der Schlauchklemmvorrichtung ist im Wesentlichen identisch mit der oben beschriebenen, unterscheidet sich jedoch von dieser dadurch, dass die radiale Anpresskraft, welche die Klemmhülse gegen die Schlauchhülse drückt, nicht von einer Überwurfmutter mit mehreren Konusflächen ausgeht, sondern von einer in axialer Richtung aufgeschobenen, zylindrischen Presshülse erzeugt wird. Der vordere Rand (in Pressrichtung gesehen) der Presshülse ist als Innenkonus ausgebildet. Die Klemmhülse ist, wie schon oben beschrieben an ihrer Aussenseite mit mehreren Konusflächen versehen, welche beim Aufschieben der Presshülse nacheinander zum Eingriff gelangen. Die Anwendung dieser Variante zeigt, dass es auch schon genügt, wenn die Presshülse satt über der Klemmhülse liegt. Ein besonders starker Anpressdruck ist nicht nötig. Dies offensichtlich dadurch, weil auch die erfindungsgemässen Versenkungen und Erhebungen des Schlauches, wenn in Axialrichtung belastet im Bereich der Versenkungen und Erhebungen eine Selbsthemmung zeigt.

Erfindungsgemäss können anstelle der Klemmhülse auch andere Klemmelemente in Zusammenspiel mit der zylindrischen Presshülse und der beschriebenen Schlauchtülle eingesetzt werden. Anstelle einer Klemmhülse mit mehreren, nach innen vorstehenden, radial verlaufenden Vorsprüngen, können auch mehrere schmale Ringe eingesetzt werden, welche nacheinander über den Schlauch geschoben werden und diesen infolge ihrer radialen Vorspannung bereits leicht in die Vertiefungen des Kontaktteils (Schlauchtülle) drücken. Durch dieses Einsinken werden die Ringe selbst in axialer Richtung fixiert und können beim Aufschieben der zylindrischen Presshülse nicht mehr verrutschen. Diese Klemmringe können aus Kunststoff oder Metall sein. Ihre radiale Elastizität wird z.B. durch wechselweise angeordnete, tiefe Einschnitte erreicht. Eine andere Art eines solchen, elastischen Klemmringes ist als offener Drahtring mit zwei ganzen Windungen ausgeführt, wobei die beiden Windungen planparallel verlaufen und die Steigung um eine Drahtstärke als Kröpfung ausgeführt ist, welche zwischen den beiden Drahtenden Platz findet. Ähnliche Drahtringe sind als Schlüsselringe bekannt.

Die zylindrische Presshülse ist aufgrund der Flächenpressung und der daraus resultierenden Reibung kraftschlüssig mit der Klemmhülse verbunden. Sie kann sogar so stark klemmen, dass sie nur mit einer geeigneten Vorrichtung und unter erheblichem Kraftaufwand abgezogen werden kann, jedoch sind für den raschen Servicefall auch leichtgängige Varianten vorgesehen. Als zusätzliche Sicherheit ist bei diesen der hintere (schlauchseitige) Rand der Presshülse so ausgebildet, dass die Presshülse durch das Aufblähen des Schlauches unter Betriebsdruck in ihrer Position gehalten bzw. sogar in Pressrichtung gedrückt gehalten wird.

Die Zeichnungen erläutern die einzelnen erfindungsgemässen Ideen anhand von Ausführungsbeispielen. Die Erfindung ist darauf jedoch nicht eingeschränkt. Dabei zeigt
- Fig. 1: einen Längsschnitt durch eine Drehkupplung mit einem einteiligen Schlauch-Kontaktteil,
- Fig. 2: einen Längsschnitt durch eine Drehkupplung mit zwei Kugellagern
- Fig. 3: einen Längsschnitt durch eine Drehkupplung mit einer dreiteiligen Schlauch-Klemmvorrichtung
- Fig. 4: einen Längsschnitt-Teil und eine Teil-Seitenansicht einer Feuerwehrschlauch-Kupplung
- Fig. 5a: einen Längsschnitt-Teil und eine Teil-Seitenansicht einer geschlitzten Klemmhülse
- Fig. 5b: eine stirnseitige Ansicht der Klemmhülse gemäss Fig. 5a
- Fig. 6: einen teilweise Längsschnitt durch eine Drehkupplung für Feuerwehrschläuche
- Fig. 7a: einen vergrösserten Ausschnitt aus Fig. 1
- Fig. 7b: Ansicht auf einen neuartigen Eine Runddraht-Sprengring (Schnappverschluss)
- Fig. 8: einen Längsschnitt durch ein neuartiges halbmontiertes Kugellager der Drehkupplung
- Fig. 9: einen Längsschnitt durch das eingepresste Kugellager
- Fig. 10: die Ansicht einer Drehkupplung Für Feuerwehrschläuche mit der erfindungsgemässen Schlaucheinbindung und in einer typischen Lage
- Fig. 11: Einen Längsschnitt durch eine Drehkupplung für Feuerwehrschläuche (Kupplungsteil selbst entspricht z.B. dem System-Storz) mit neuer Schlauch-Klemmvorrichtung.
- Fig. 12: Eine Seitenansicht einer solchen Kupplung, teilweise geschnitten, mit einer anderen Schlauch-Klemmvorrichtung aus Kunststoff- oder Metallringen.
Fig. 12a zeigt einen Schnitt durch den federnden Klemmring gemäss Fig. 12;
- Fig. 12b: eine vergrösserte Draufsicht auf einen Ausschnitt des Klemmelementes gem. Fig. 12 und
- Fig. 12c: einen vergleichbaren Schnitt zu Fig. 12a jedoch durch eine Variante mit bombierten Klemmelementsegmenten.
- Fig. 13: Eine Seitenansicht einer modifizierten Storz-Kupplung, teilweise geschnitten, mit einer Schlauch-Klemmvorrichtung mittels Drahtringen.

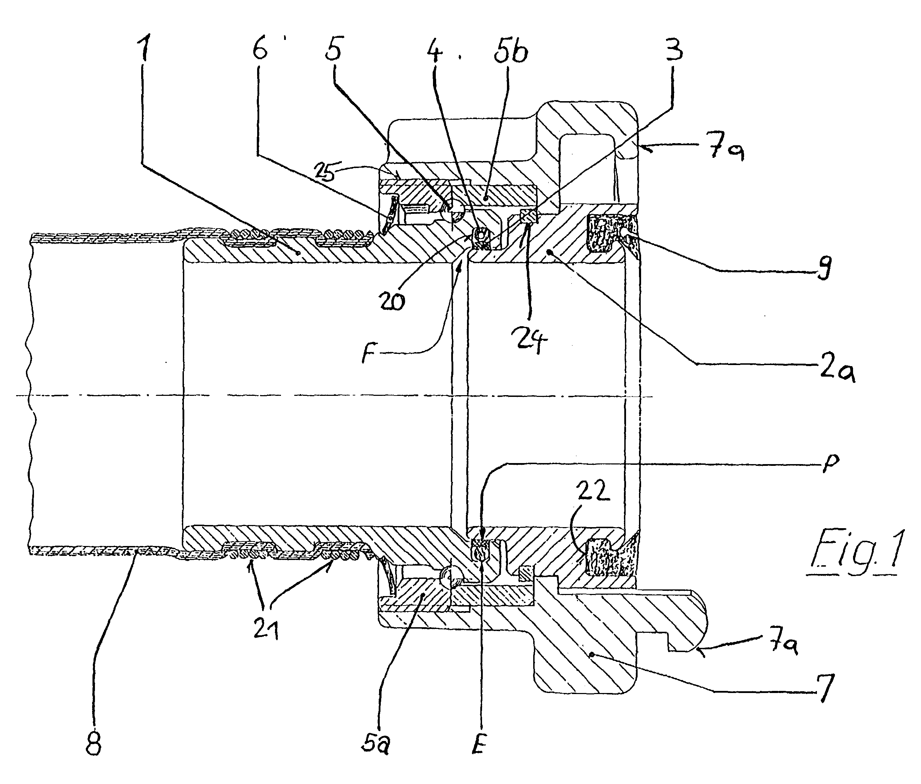

Fig. 1 zeigt eine Drehkupplung mit einem einteiligen Schlauch-Kontaktteil 1, vorzugsweise einer Schlauchtulle, an dem bzw. an der eine nach innen offene, radiale Nut 20 vorgesehen ist, in welcher ein spezieller Dichtungsring 3, 4 so angeordnet ist, dass er mit der elastomeren Aussenseite E am Nutgrund statisch abdichtet und mit der nach innen gewandten PTFE-Lauffläche P auf der Umfangsfläche des Gegenstückes 2a gleitet. Mindestens ein, in unmittelbarer Nähe des Dichtungsringes 3, 4 angeordnetes Wälzlager 5, 5a, 5b sorgt für präzise Führung der Teile 1 u.2a zueinander und nimmt die axialen und radialen Kräfte auf. Dieses Wälzlager wird durch einen aussenliegenden Schmutzabstreifring 6 vor Schmutz und Sand geschützt.

Ein über das Schlauch-Kontaktteil 1 gestülptes Schlauchende 8 ist mittels Bindedraht 21 befestigt. Im Gegenstück 2a ist eine Stirnnut 22 zur Aufnahme einer Stirndichtung 9 ausgebildet. Die Wälzlagerteile 5a, 5b sind über eine Anschlussvorrichtung 7 mit dem Gegenstück 2a verbunden. Dabei wird das Gegenstück 2a etwa von einem Sprengring 24 an der Anschlussvorrichtung 7 gehalten, welche über ein Gewinde 25 mit dem Lagerteil 5a verbunden ist. An der Anschlussvorrichtung 7 sind Eingriffselemente 7a ausgebildet, die ein festes Eingreifen an einem entsprechenden Anschlussteil ermöglichen.

Die Fugen F zwischen den beweglichen Teilen klaffen zum Medium hin auseinander, um eindringende Fremdkörper wie Sandkörner sofort wieder freizugeben und nicht zu vermahlen. Die Drehkupplung wird insbesondere mit Tank-Abfüllschläuchen für Heizöl, mit Pressluft-Momenten Kupplungen, oder mit Hochdruckschläuchen, insbesondere mit Schraubkupplungen derselben, eingesetzt.

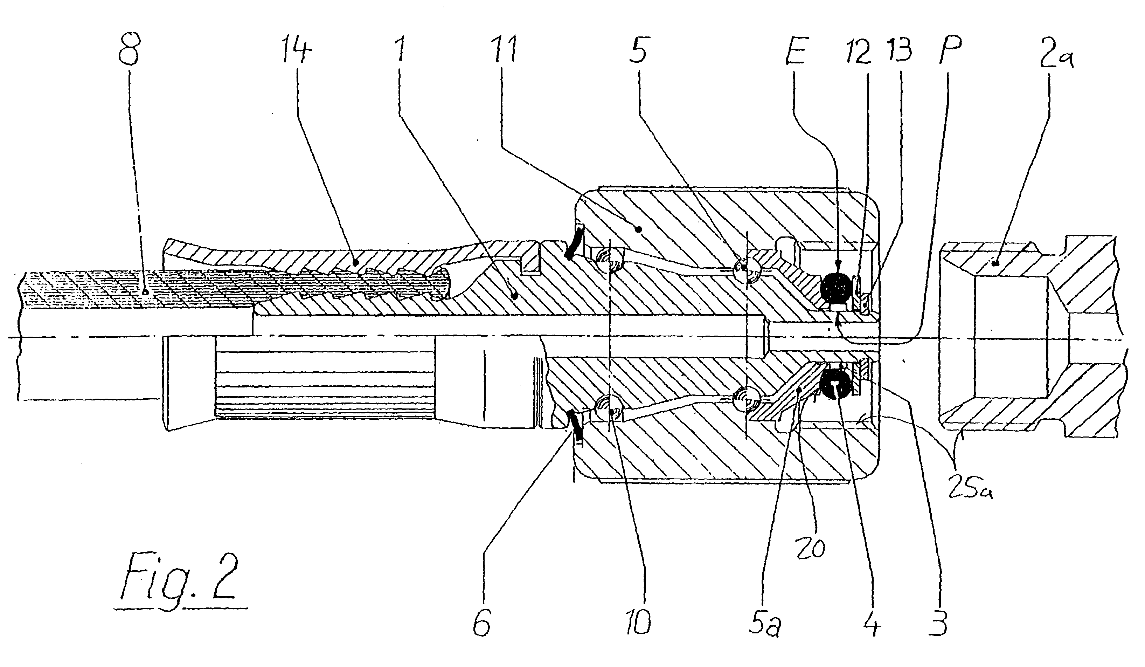

Die in Fig.2 dargestellte Konstruktion ist besonders für hohe Drücke vorgesehen. Der Dichtungsring 3, 4 wird mittels vorgesteckter Scheibe 12 und Sicherungsring 13 auf dem freien Ende des Schlauch-Kontaktteiles 1 gehalten. Die freiliegende, elastomere Aussenseite E des Dichtungsringes 3, 4 dient bei mittels des Gewindes 25a eingeschraubtem Gegenstück 2a gleichzeitig als statische Dichtung gegenüber dem Gegenstück 2a. Die Dichtungsaufnahme 20 wird dabei vom Lagerteil 5a, von der Scheibe 12 und von der daran angrenzenden Innenfläche des Gegenstückes 2a gebildet. Zusätzlich zu dem in unmittelbarer Nähe des Dichtringes 3, 4 plazierten Lager 5 ist axial versetzt ein zweites Wälzlager 10 angeordnet, welches vorwiegend von aussen einwirkende, radiale Kräfte aufnimmt. Ausserhalb dieses zweiten Wälzlagers 10 ist ein Schmutzabstreifring 6 angebracht, welcher die beiden Wälzlager 5, 10 vor Schmutz und Sand schützt. Zum Festklemmen des Schlauchendes 8 sitzt auf dem Schlauch-Kontaktteil 1 und über dem Schlauchende 8 eine Klemmhülse 44.

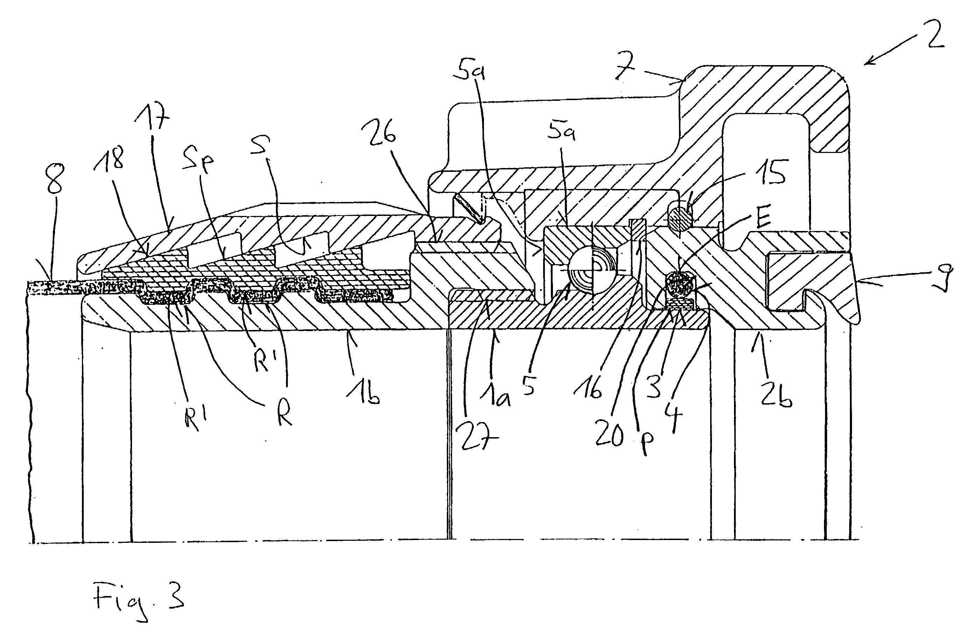

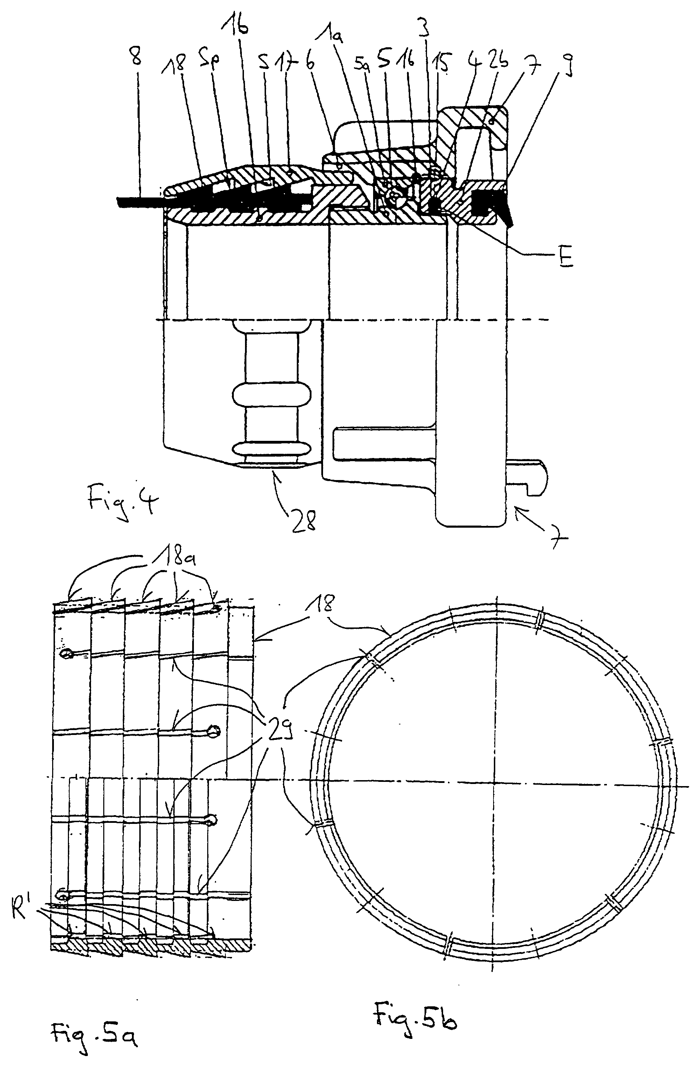

Fig. 3 und 4 zeigen anhand einer Feuerwehrschlauch-Kupplung eine weitere kompakte Ausführungsform der erfindungsgemässen Drehkupplung. Dabei umfasst das Drehteil 2 einen Dichtungsträgerring 2b, einen Bajonett-Verschluss 7 und einen Lager-Aussenring 5a. Der Dichtungsträgerring 2b nimmt stirnseitig die statische Stirndichtung 9 - einen Lippenring - und radial die zweiteilige Drehdichtung, bzw. den Dichtungsring 3, 4 auf. Der Dichtungsträger 2b wird durch einen Schnappverschluss, vorzugsweise einen Draht-Sprengring 15 in seiner Längsrichtung fixiert und stützt sich nach dem Einkuppeln des Bajonett-Verschlusses 7 auf dem Sprengring 16 ab. Der Dichtungträger 2b weist an seinem innenliegenden Ende eine nach innen offene, radiale Nut 20 auf, in welcher die zweiteilige Drehdichtung 3, 4 so angeordnet ist, dass sie mit ihrer elastomeren Aussenseite E statisch am Nutgrund abdichtet und mit der nach innen gewandten PTFE bzw. Thordon-Lauffläche P auf der glatten Umfangsfläche des auskragenden Lager-Innenringes 1a gleitet, wenn dieser gedreht wird. Der Lager-Innenring 1a bildet zusammen mit den Kugeln 5 und dem Lager-Aussenring 5a ein Schrägkugellager, welches die axialen und radialen Kräfte aufnimmt und eine präzise Führung des Lager-Innenringes 1a bewirkt.

Das der Drehdichtung gegenüberliegende Ende des Lager-Innenringes 1a ist über eine Schraubverbindung 27 fest mit der Innenhülse 1b, bzw. einer Schlauchtülle, einer Schlauch-Klemmvorrichtung verbunden. Die Innenhülse 1b weist an ihrer Aussenseite mindestens eine, vorzugsweise aber mehrere, radiale Rillen R für die Verankerung des Schlauchendes 8 auf und trägt über ein Verschiebe-Gewinde 26 eine als Überwurfmutter ausgebildeten Aussenhülse 17. Zwischen der Aussenhülse 17 und dem zylindrischen Ende des Bajonett-Verschlusses 7 ist ein leicht drehbarer Schmutzabstreif-Ring 6 angeordnet, welcher das Schrägkugellager 5 vor eindringendem Schmutz und Sand schützt.

Das Festklemmen des Schlauches 8 erfolgt im Gegensatz zu herkömmlichen Schlaucharmaturen nicht mit Bindedraht, Schlauchbindern, Manschetten etc., sondern durch Überstreifen und.Verschrauben der Aussenhülse 17 mit integrierter Spannzange, bzw. Klemmhülse 18. Die in Längsrichtung wirkende Schraubkraft der Aussenhülse 17 wird über ein sägezahnartiges Profil S an deren Innenseite auf die profilgleiche Aussenseite Sp der flexiblen Klemmhülse 18 übertragen und in eine radial wirkende Kraft umgewandelt, wodurch die flexible Klemmhülse 18 zusammengedrückt wird und mit ihrer profilierten Innenseite, bzw. den radialen Erhebungen R' den Schlauch 8 in das deckungsgleiche Profil, bzw. die radialen Vertiefungen R der Innenhülse 1b presst. Die zusammenwirkenden sägezahnartigen Profile umfassen mindestens je eine Konus-Teilfläche. Diese Schlauchverbindung weist gegenüber herkömmlichen Verbindungsarten eine Reihe von Vorteilen auf und ist auch unabhängig von der Drehkupplung neu und erfinderisch. Sie vermindert das Verletzungsrisiko durch konsequentes Vermeiden von scharfen Kanten, vorspringenden Teilen, wie Drahtenden, Schnallen und Schrauben. Die Montage ist schnell und einfach und erfordert keine Bindemaschinen. Sie schont das Schlauchmaterial durch sanfte Übergänge von "hart" auf "weich". Der Schlauch 8 sitzt so fest, dass er mit Gewalt nur abgerissen aber nicht herausgezogen werden kann.

In der Fig. 4 sind die zum Schrauben der Aussenhülse 18 nötigen Griffrippen 28 dargestellt.

Fig. 5a und 5b zeigen eine Klemmhülse 18 mit fünf an der Aussenseite ausgebildeten Konus-Teilflächen 18a und fünf an der Innenseite ausgebildeten radial verlaufenden Erhebungen R'. Damit die Klemmhülse 18 zusammendrückbar ist, sind axial verlaufende Schlitzungen 29 abwechslungsweise von den beiden Stirnseiten ausgehend ausgebildet.

Diese Ausführungsbeispiele zeigen somit zusammenfassend: Eine Drehkupplung zum drehbaren und leckfreien Anschliessen von Schläuchen 8 an einen Anschluss, mit einem Schlauch-Kontaktteil 1,1b und einem drehbar damit verbundenen Drehteil 2, umfasst zwischen dem Schlauch-Kontaktteil 1,1b und dem Drehteil 2 mindestens ein Kugellager 5,10 und eine radiale Drehdichtung mit einem zweikomponentigen, insbesondere zweiteiligen, Dichtungsring 3,4, wobei der Dichtungsring 3,4 eine reibungsarme Gleitkomponente 3 und eine elastisch verformbare Dichtungskomponente 4 umfasst. Die radiale Drehdichtung umfasst zwei im wesentlichen zylindrische, einander zugeordnete, um die Schlauchachse verlaufende Gleitflächen, wobei eine erste Gleitfläche an einem ersten hülsenförmigen Kupplungsteil 1a,2a und eine zweite Gleitfläche an der Gleitkomponente 3 des Dichtungsringes 3,4 ausgebildet ist, welcher Dichtungsring 3,4, insbesondere dessen Dichtungskomponente 4, in einer Dichtungsaufnahme 20 eines zweiten hülsenförmigen Kupplungsteiles 1,2b, insbesondere einer ringförmigen, nach innen oder aussen offenen Nut, angeordnet ist, so dass in der Leitung gefördertes Fluid auf der einen axial ausgerichteten Seite der Dichtungskomponente 4 mit dieser in Kontakt gelangt und diese mit der Druckdifferenz zwischen dem Schlauchinneren und der Umgebung dichtend an Innenflächen der Dichtungsaufnahme 20 drückt. Das Schlauchende 8 ist über eine Schlauch-Klemmvorrichtung 1b,17,18 mit der Kupplung verbindbar. Die Klemmvorrichtung 1b,17,18 umfasst eine Innenhülse 1b, eine als Überwurfmutter darauf sitzende Aussenhülse 17 und eine Klemmhülse 18, wobei eine Konusfläche S der Aussenhülse 17 an einer Konusfläche Sp der Klemmhülse 18 anliegt und diese durch eine axiale Bewegung der Aussenhülse 17 radial nach innen gegen das eingeschobene Schlauchende 8 pressbar macht. Um die Klemmwirkung stark zu erhöhen, sind an der Innenseite der Klemmhülse 18 nach innen vorstehende radial verlaufende Vorsprünge R' und an der Aussenseite der Innenhülse 1b an die Vorsprünge angepasste radial verlaufende Vertiefungen R vorgesehen, so dass ein festgeklemmter Schlauch 8 balgartig verformt wird. Die dabei entstehende Klemmung ist äusserst zugfest.

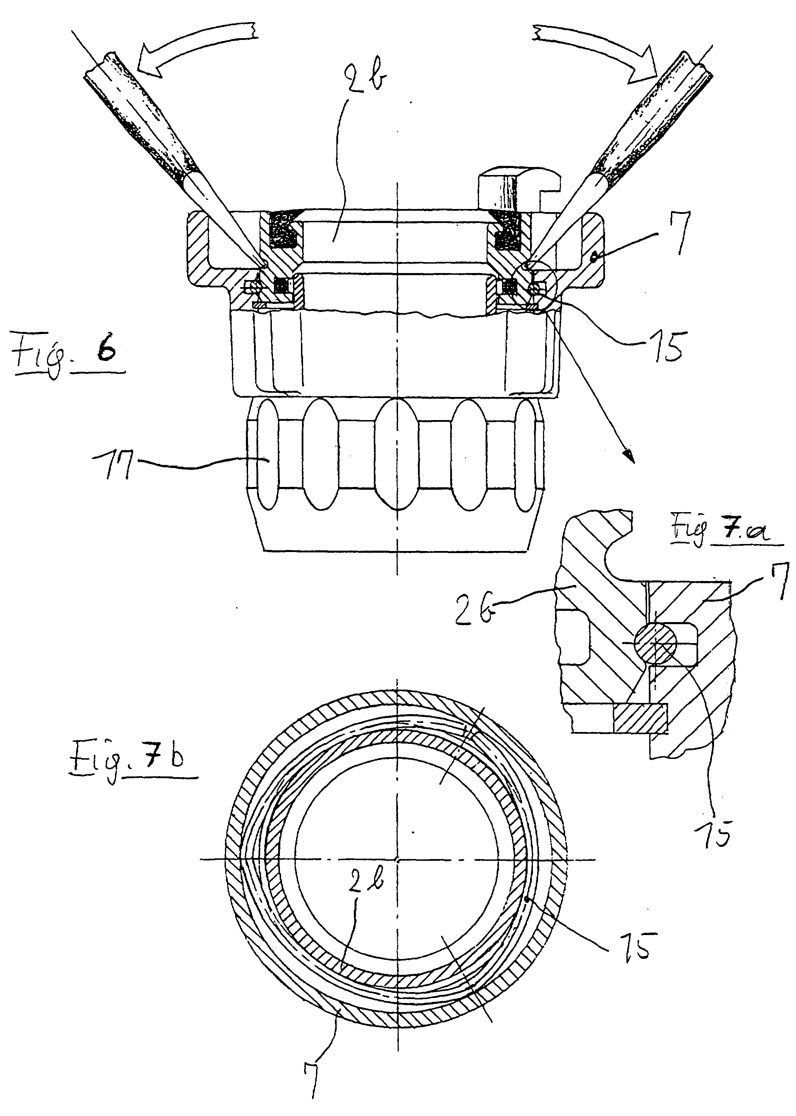

Fig.6 zeigt eine erfindungsgemässe Drehkupplung für Feuerwehrschläuche im Bereich des Dichtungsträger 2b partiell aufgeschnitten. Wie schon oben beschrieben, wird der Dichtungsträger 2b durch einen Drahtsprengring 15 in seiner Längsrichtung fixiert. Dieser kann eine neue spezielle Form aufweisen oder herkömmlich ausgebildet sein. Fig. 6 zeigt auch wie der Dichtungsträger 2b mit Hilfe von zwei Hebeln (z.B. Schraubenzieher) einfach aus seiner Verankerung gelöst werden kann. Das Einsetzen des Dichtungsträgers 2b erfolgt durch starken Druck oder einem Schlag mit einem Holz- bzw. Kunststoffhammers.

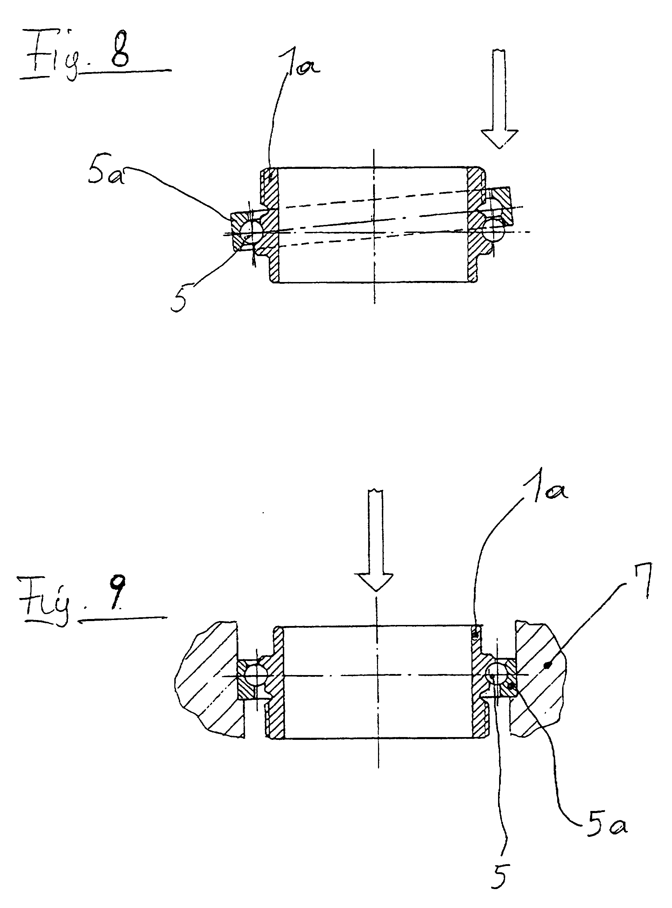

Fig.7a zeigt einen vergrösserten Ausschnitt aus Fig. 6 mit dem Schnappmechanismus (Sprengring 15), welcher den Dichtungsträger 2b gegenüber dem Bajonettverschlussteil 7 in seiner Längsrichtung fixiert.

Fig.7b zeigt eine Aufsicht auf den neuartigen Sprengring 15 sowie einen Querschnitt auf die Mittelebene des Sprengringes durch die Teile 7 bzw. 2b. Der Sprengring 15 welcher einem Dreieck mit ausgewölbten seiten gleicht, stützt sich an drei Punkten am Grund der nach innen offen, radialen Nut im Bajonettverschlussteil 7 ab und wird dadurch zur Bohrung zentriert. An drei weiteren, gleichmässig am Umfang verteilten Punkten greift der Sprengring 15 mit den Seiten des Dreiecks in die Nut des Dichtungsträgers 2b ein. Der Eingriffswinkel zur Längsachse beträgt dabei ca. 20-40°. Dieser Winkel ist neben der Materialwahl und der Dichte des Ringes eine der bestimmenden Grössen der Ausrastkraft.

Fig.8 zeigt das neuartige, bevorzugte ausgeweitete Spezialkugellager in der Montagephase. Der Aussenring 5a wird auf den mit Kugeln 5 vollbestückten Innenring 1a in der dargestellten Weise schräg aufgesetzt und anschliessend in Richtung des Pfeiles aufgepresst. Die Kugeln können dabei mit Fett haftend beschichtet sein.

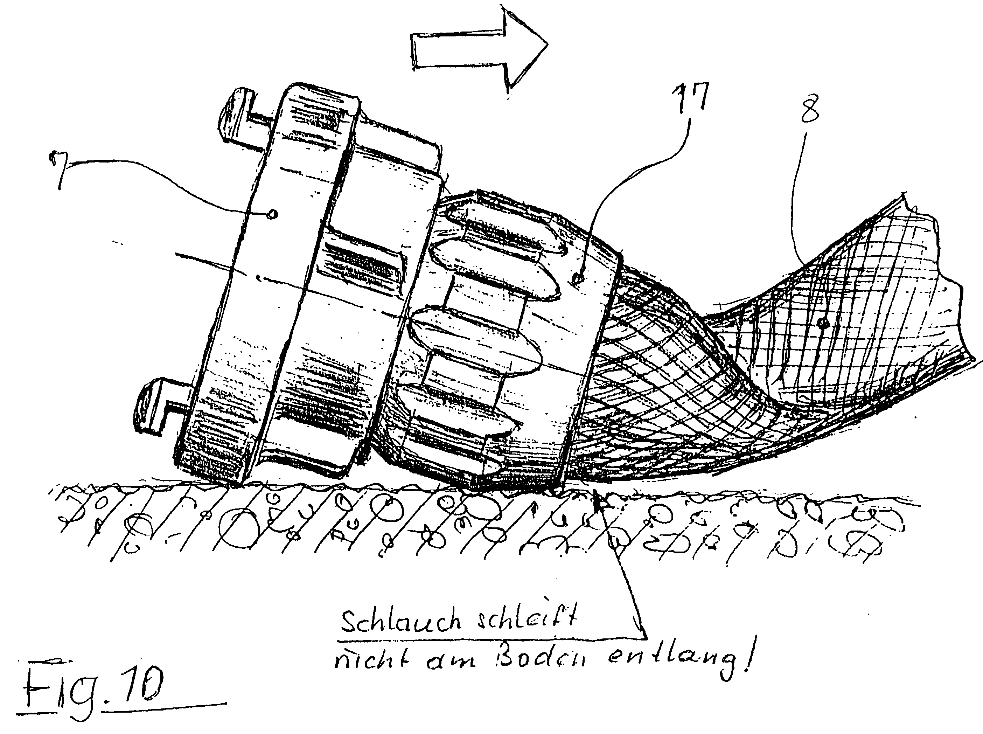

Fig.9 zeigt das Spezialkugellager (1a, 5u, 5a) eingepresst in den Bajonettverschluss 7. Die aus dem festen Presssitz zwischen dem Bajonettverschluss 7 und dem Lager-Aussenring 5a resultierenden, radialen Spannungen drücken den Lager-Aussenring 5a geringfügig zusammen, wodurch das Radial-Spiel des Lagers reduziert bzw. richtig eingestellt wird.

Fig.10 zeigt vor allem die Schutzfunktion der Überwurfmutter 17 unter Einsatzbedingungen. Schlauchkupplung und Schlauch sind in der typischen Lage dargestellt, welche sie beim Einziehen (Schleifen über den Boden) des Schlauches einnehmen. Es ist deutliche zu erkennen, dass nur die Metallteile wie Bajonettverschluss 7 bzw. Überwurfmutter 17 über den Boden schleifen, jedoch nicht der Schlauch, wie dies bei herkömmlichen Schläuchen häufig ist.

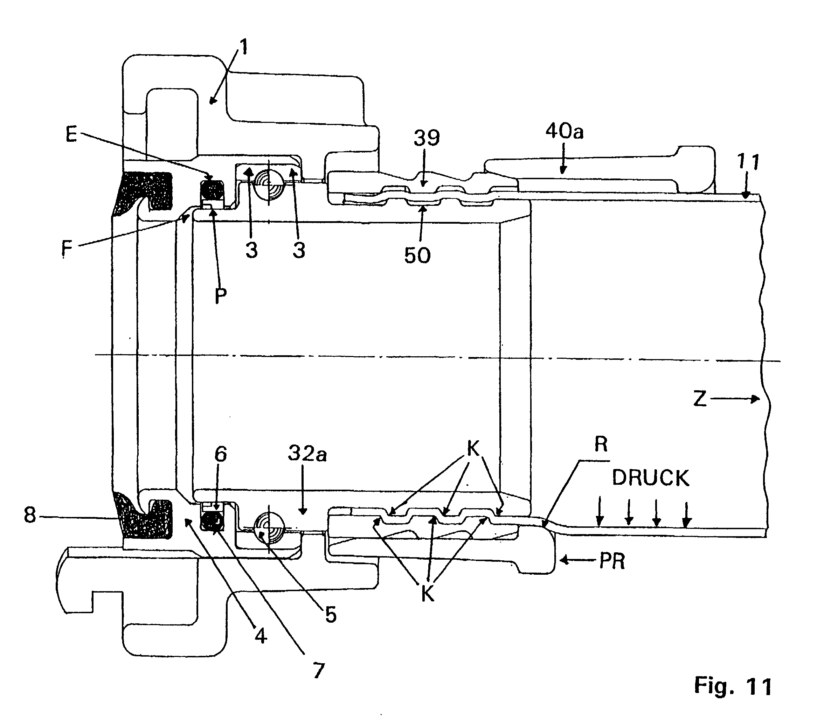

Fig. 11 zeigt eine Drehkupplung für Feuerwehrschläuche welche aus drei Teilen, bzw. Baugruppen, dem Kupplungsteil (Knaggenteil) 31, der Dreheinheit 32, 3, 4, 5, 6, 7 und 8 sowie der Schlauch-Klemmvorrichtung 32,39,40 und 41 zusammengesetzt ist.

Das Kupplungsteil (Knaggenteil) 31 ist im wesentlichen ein Standard-Teil der heute überall in Europa gebräuchlichen Storz-Kupplung, lediglich mit leicht modifizierter Innenkontur.

Die Dreheinheit besteht im wesentlichen aus dem erfindungsgemässen Schlauch-Kontaktteil 32, welches an seinem einen Ende als Schlauchtülle ausgebildet ist, währenddessen das andere, halsförmige Ende mit seiner zylindrischen Aussenfläche auf der PTFE-Lauffläche P, der zweiteiligen Drehdichtung 6 und 7 gleitet. Die zweiteilige Drehdichtung 6 und 7 ist im Dichtungsträger 4 so angeordnet, das sie mit ihrer elastomeren Aussenseite E am Nutgrund abdichtet. Mindestens ein in unmittelbarer Nähe der Drehdichtung 6 und 7 angeordnetes Wälzlager 3 und 5 sorgt für präzise Führung der Teile 32 und 4 zueinander und nimmt die axialen und radialen Kräfte auf.

Die Schlauch-Klemmvorrichtung, bestehend aus dem einen Ende (Schlauchtülle) des Schlauch-Kontaktteiles 32 ist in zwei verschiedenen Zuständen dargestellt. Die obere Hälfte des Schnittbildes zeigt die Schlauch-Klemmvorrichtung unverpresst. Der über den Schlauch 41 gestülpte Klemmring 39 drückt durch seine radiale Vorspannung den Schlauch 41 geringfügig in die Vertiefungen der Schlauchtülle des Schlauch-Kontaktteiles 32.

Die untere Hälfte des Schnittbildes zeigt die Schlauch-Klemmvorrichtung in verpresstem Zustand. Der Schlauch 41 ist vollständig in die Vertiefungen der Schlauchtülle 32 eingepresst. Die Schlauchtülle des Schlauch-Kontaktteiles 32, der Schlauch 41 sowie die Klemmhülse 39 bilden infolge der radial wirkenden Vorspannung durch die Presshülse 40 eine formschlüssige Einheit. Axiale Zugkräfte Z des Schlauches 41 bewirken ein Nachrücken der Klemmhülse 39 und erhöhen die Klemmkraft zwischen den Kanten K. Zusätzlich wird die Presshülse 40 durch das Aufblähen des unter Druck stehenden Schlauches 41 über den Radius R in Position gehalten, bzw. in Pressrichtung PR gedrückt.

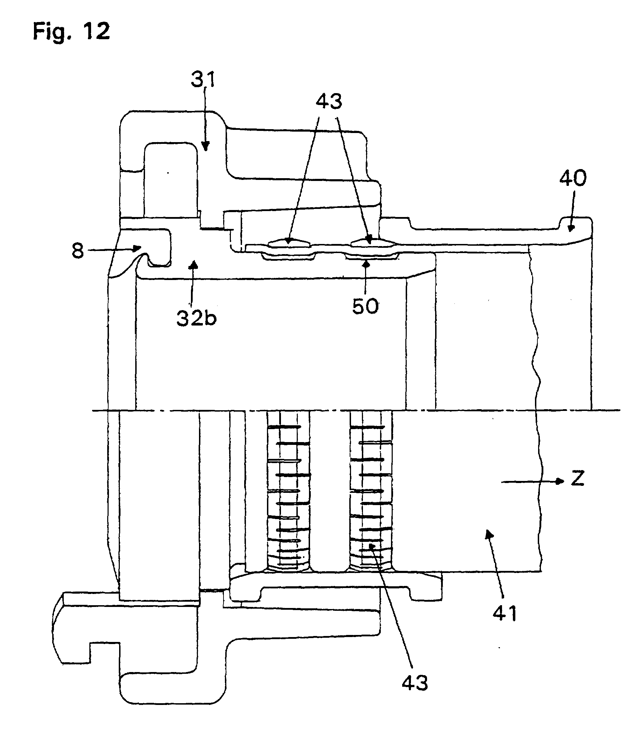

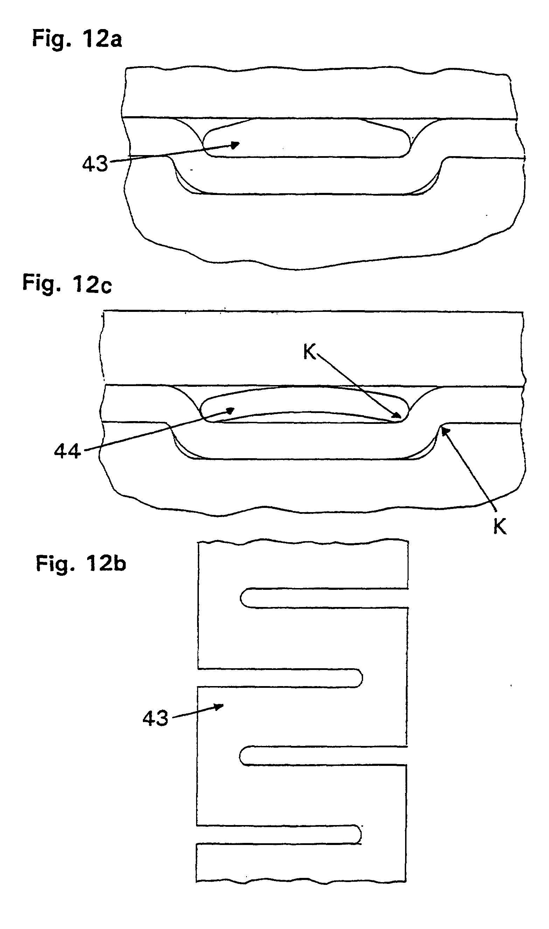

Fig. 12 zeigt eine ähnliche Kupplung mit einer Schlauch-Klemmvorrichtung mittels zwei elastischen Kunststoff- oder Metallklemmringen 43 bzw. 44. Die obere, geschnittene Hälfte der Darstellung zeigt die Schlauch-Klemmvorrichtung in unverpresstem Zustand. Die aufgezogenen Klemmringe 43 haben den Schlauch 41 infolge ihrer radialen Vorspannung etwas eingeschnürt und sitzen in den Vertiefungen fest. Durch Aufpressen des Pressringes 40 werden die Klemmringe 43 bzw. 44 vollends in die Vertiefungen der Schlauchtülle 32 gedrückt. Axiale Zugkräfte Z des Schlauches 41 bewirken ein Nachrücken der Klemmringe 43 bzw. 44 und erhöhen die Klemmkraft zwischen den Kanten K, wie dies übrigens auch beim Aufbau gem. Fig. 11 stattfindet.

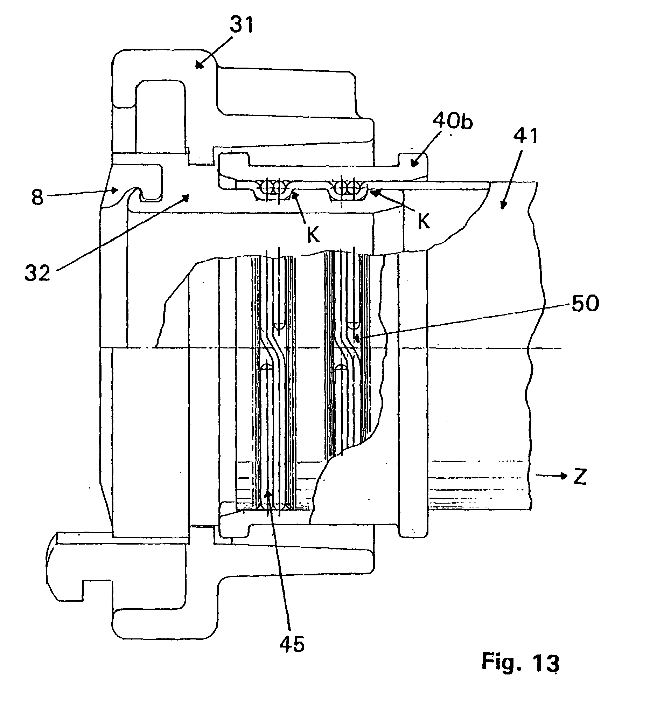

Fig. 13 zeigt ebenfalls eine ähnliche Kupplung mit einer Schlauch-Klemmvorrichtung mittels Drahtringen 15. Die Drahtringe 45 sind radial vorgespannt und werden durch Aufpressen der Presshülse vollends in die Vertiefungen der Schlauchtülle 32 gedrückt. Axiale Zugkräfte Z des Schlauches 41 bewirken ein Nachrücken der Drahtringe 15 und erhöhen die Klemmkraft zwischen diesen und den Kanten.

Alternativ können anstelle der Ringe auch handgewickelte Drähte aufgebracht werden, wie dies traditionell üblich war. Auch dabei ergibt sich ein erfindungsgemässer Vorteil: Die Drähte sind durch die Presshülse geschützt vor Zugriff und dadurch ist die Verletzungsgefahr reduziert.

Die Fig. 12-13 stellen somit einfache Alternativen dar für die Befestigungsmöglichkeiten eines Schlauches gemäss den Varianten der Fig. 1-10, bei denen anstelle des einfachen Aufschiebens einer Presshülse ein Pressteil aufgeschraubt wird. Dabei ist es für diesen Erfindungsgedanken nicht wesentlich, ob es sich um eine Drehkupplung oder eine nicht drehbare Kupplung, wie in Fig. 12 und 13 handelt. In Fig. 1 ist das an und für sich herkömmliche Verfahren mit dem Befestigen des Schlauches durch einen Draht dargestellt, jedoch ist auch diese Variante mit Hilfe einer Presshülse entsprechend den Fig. 11-13 verbesserbar, zumal die Qualität und die Spannung des aufgewickelten Drahtes nicht so gross ein braucht.

## Patentansprüche

1. **Schlauchkupplung,** insbesondere Feuerwehrschlauchkupplung, mit
- mindestens einem Kugellager (5,10) und
- mindestens einer radialen Drehdichtung mit einem zweikomponentigen, insbesondere zweiteiligen Dichtungsring (3,4), wobei der Dichtungsring (3,4) eine reibungsarme Gleitkomponente (3) und eine elastische Dichtungskomponente (4) umfasst,
zur Verbindung mit einer gegengleichen Schlauchkupplung oder einem gegengleichen Anschluss
zur Herstellung einer drehbaren Verbindung,
**dadurch gekennzeichnet, dass**
die Schlauchkupplung ein Schlauchkontaktbauteil (1,1b,32) und
ein Kupplungsbauteil (2,7,31) aufweist, wobei das Schlauchkontaktbauteil (1,1b,32) mit dem Kupplungsbauteil (2,7,31) drehbar verbunden ist und
der Dichtungsring (3,4) zwischen Schlauchkontaktbauteil (1,1b,32) und Kupplungsbauteil (2,7,31) angeordnet ist.

2. Schlauchkupplung nach Anspruch 1,
**dadurch gekennzeichnet, dass**
- das Schlauchkontaktbauteil (1,1b,32) an seiner Schlauchkontaktoberseite Ringnuten (50) aufweist,
wobei den Ringnuten (50) ringförmige Klemmelemente (21,39,43,44,45) zugeordnet sind, dergestalt, dass diese im montierten Zustand einen Schlauch (8,11,41) in die Ringnuten (50) presst, dass
- den Klemmelementen (21,39,43,44,45) ein Pressring (40) in Bezug auf den Schlauch (8,11,41) längsverschieblich zugeordnet ist, der im montierten Zustand die Klemmelemente (21,39,43,44,45) gegen den Nutgrund der Ringnuten (50) drückt und dass
- die Klemmelemente (21,39,43,44,45) aus mäanderförmig geformten Flachband bestehen, dessen axialerstreckte Teilstücke vorzugsweise nach radial aussen konisch angeschrägt (43) oder bombiert (44) erhaben ausgebildet sind.

## Claims

1. Hose coupling, in particular fire brigade hose coupling, comprising
- at least one ball bearing (5, 10) and
- at least one radial rotary seal having a two-component, in particular two-part, packing ring (3, 4), the packing ring (3, 4) comprising a low-friction sliding component (3) and an elastic sealing component (4),
for connection to a diametrically opposed hose coupling or a diametrically opposed connection, for the production of a rotatable connection, **characterized in that** the hose coupling has a hose contact assembly (1, 1b, 32) and a coupling assembly (2, 7, 31), the hose contact assembly (1, 1b, 32) being rotatably connected to the coupling assembly (2, 7, 31) and the packing ring (3, 4) being arranged between hose contact assembly (1, 1b, 32) and coupling assembly (2, 7, 31).

2. Hose coupling according to Claim 1, **characterized in that**
- the hose contact assembly (1, 1b, 32) has annular grooves (50) on the top of its hose contact, annular clamping elements (21, 39, 43, 44, 45) being coordinated with the annular grooves (50) in such a way that said clamping elements, in the mounted state, press the hose (8, 11, 41) into the annular grooves (50), that
- a pressure ring (40) is coordinated with the clamping elements (21, 39, 43, 44, 45) in a longitudinally displaceable manner relative to the hose (8, 11, 41), which pressure ring, in the mounted state, presses the clamping elements (21, 39, 43, 44, 45) against the base of the annular grooves (50), and that
- the clamping elements (21, 39, 43, 44, 45) consist of a meander-shaped flat band whose axially extending segments are preferably conically bevelled (43) in a radially outward direction or dished (44) in a convex manner.

## Revendications

1. Raccord pour tuyau flexible, en particulier raccord pour tuyau d'incendie, comportant
- au moins un roulement à billes (5, 10), et
- au moins un joint d'étanchéité tournant radial avec une bague d'étanchéité (3, 4) à deux composants, en particulier en deux parties, la bague d'étanchéité (3, 4) comprenant un composant glissant (3) à faible coefficient de frottement et un composant d'étanchéité (4) élastique,
pour assurer la liaison à un autre raccord pour tuyau flexible conjugué, ou bien à un raccordement conjugué,
pour établir une liaison rotative,
**caractérisé en ce que**
le raccord pour tuyau flexible présente un composant de contact de tuyau flexible (1, 1b, 32) et un composant de raccord (2, 7, 31), le composant de contact pour tuyau flexible (1, 1b, 32) étant relié, avec possibilité de rotation, au composant de raccord (2, 7, 31), et
la bague d'étanchéité (3, 4) est disposée entre le composant pour contact de tuyau (1, 1b, 32) et le composant pour raccord (2, 7, 31).

2. Raccord pour tuyau flexible selon la revendication 1,
**caractérisé en ce que**
- le composant de contact de tuyau flexible (1, 1b, 32) présente des gorges annulaires (50) sur sa face supérieure de contact avec le tuyau flexible,
où aux gorges annulaires (50) sont associés des éléments de serrage (21, 39, 43, 44, 45) en forme d'anneau, de manière que ceux-ci, à l'état monté, pressent un tuyau flexible (8, 11, 41) dans les gorges annulaires (50), **en ce que**,
- aux éléments de serrage (21, 39, 43, 44, 45) est associé un anneau de pressage (40), déplaçable longitudinalement par rapport au tuyau flexible (8, 11, 41), qui lorsque les éléments de serrage (21, 39, 43, 44, 45) sont à l'état monté, presse contre le fond des gorges annulaires (50), et **en ce que**
- les éléments de serrage (21, 39, 43, 44, 45) sont formés d'une bande plate conformée en méandres, dont des morceaux partiels étirés axialement sont, de préférence, chanfreinés radialement extérieurement, à une allure conique (43), ou en relief, bombés (44).
